(19)

Europäisches
Patentamt
European
Patent Office
Office européen
des brevets

(11) **EP 4 765 241 A2**

(12) **EUROPEAN PATENT APPLICATION**

(43) Date of publication:
**24.06.2026 Bulletin 2026/26**

(21) Application number: **25218232.4**

(22) Date of filing: **25.11.2025**

(51) International Patent Classification (IPC):
*H01M 4/36* (2006.01)     *H01M 4/58* (2010.01)
*H01M 4/62* (2006.01)

(52) Cooperative Patent Classification (CPC):
**H01M 4/5825; H01M 4/366; H01M 4/625**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.12.2024 JP 2024223982**

(71) Applicant: **Toyota Jidosha Kabushiki Kaisha
Toyota-shi, Aichi-ken 471-8571 (JP)**

(72) Inventors:
• **ISHIGAKI, Yuki
  Toyota-shi, 471-8571 (JP)**
• **MAHARA, Takanori
  Toyota-shi, 471-8571 (JP)**
• **KOSAKA, Daichi
  Toyota-shi, 471-8571 (JP)**

(74) Representative: **Kuhnen & Wacker
Patent- und Rechtsanwaltsbüro PartG mbB
Prinz-Ludwig-Straße 40 A
85354 Freising (DE)**

(54) **CATHODE ACTIVE MATERIAL, BATTERY, AND METHOD FOR PRODUCING CATHODE ACTIVE MATERIAL**

(57)     The present disclosure relates to a cathode active material, a battery, and a method for producing a cathode active material. The cathode active material includes: an olivine phosphate compound (1) including at least one selected from the group consisting of lithium manganese phosphate and lithium manganese iron phosphate; and a coating (5) that covers at least part of a surface of the cathode active material, and contains carbon and iron.

FIG. 1

EP 4 765 241 A2

**Description**

BACKGROUND OF THE INVENTION

1. Field of the Invention

The present disclosure relates to a cathode active material, a battery, and a method for producing a cathode active material.

2. Description of Related Art

Japanese Unexamined Patent Application Publication No. 2014-225409 (JP 2014-225409 A) discloses a cathode active material including, on the surface of an olivine phosphate, a metal compound containing a metal element such as iron (Fe) and phosphorus (P), and a coating layer containing carbon (C).

SUMMARY OF THE INVENTION

As the cathode active material, research has been conducted on olivine phosphate compounds such as lithium manganese phosphate (hereinafter may be abbreviated to "LMP") and lithium manganese iron phosphate (hereinafter may be abbreviated to "LMFP"). Olivine phosphate compounds tend to have poor rate characteristics. It has been proposed that the rate characteristics can be improved by coating primary particles of an olivine phosphate compound with C. When the olivine phosphate compound contains manganese (Mn), however, it has low affinity with C, thereby causing difficulty in forming a coating layer containing C. This may result in deterioration of the rate characteristics.

The present disclosure provides a cathode active material, a battery, and a method for producing a cathode active material that can achieve improvement in rate characteristics.

Technical configurations and functions and effects of the present disclosure will be described below. An action mechanism according to the present disclosure includes estimation. The action mechanism does not limit the technical scope of the present disclosure.

A cathode active material according to a first aspect of the present disclosure includes: an olivine phosphate compound including at least one selected from the group consisting of lithium manganese phosphate and lithium manganese iron phosphate; and a coating that covers at least part of a surface of the cathode active material, and contains carbon and iron.

With the coating containing Fe, a coating layer is formed easily. As a result, improvement in rate characteristics can be expected.

In the cathode active material according to the above aspect, the iron may be present in a region having a thickness of 0.5 nm or more from an interface between the olivine phosphate compound and the coating.

It is believed that the affinity between Mn and C is increased by the presence of the iron in the region having the thickness of 0.5 nm or more from the interface between the olivine phosphate compound and the coating. As a result, further improvement in rate characteristics can be expected.

In the cathode active material according to the above aspect, a mass fraction of the iron in the coating may be 0.1 % or more with respect to a mass of the cathode active material.

When the mass fraction of the iron contained in the coating is 0.1 % or more with respect to the mass of the cathode active material, improvement in rate characteristics can be expected.

In the cathode active material according to the above aspect, the olivine phosphate compound may be the lithium manganese iron phosphate.

A battery according to a second aspect of the present disclosure includes the cathode active material according to the above aspect.

The battery according to the above aspect may have a bipolar structure.

A method for producing a cathode active material according to a third aspect of the present disclosure includes: forming a first slurry by mixing a manganese compound, a lithium compound, a phosphate compound, a carbon source, and a first solvent; forming first precursor particles by drying the first slurry; forming second precursor particles by subjecting the first precursor particles to first heat treatment; forming a second slurry by mixing the second precursor particles, a chelate compound, and a second solvent, the chelate compound containing iron; forming third precursor particles by drying the second slurry; and producing an olivine phosphate compound by subjecting the third precursor particles to second heat treatment, at least part of a surface of the olivine phosphate compound being covered with a coating.

Through the production process according to the above aspect, production of the cathode active material according to the above aspect can be expected.

In the method for producing the cathode active material according to the above aspect, the chelate compound may include a sugar carboxylic acid.

An embodiment of the present disclosure (hereinafter may be abbreviated to "present embodiment") and an example of the present disclosure (hereinafter may be abbreviated to "present example") will be described. It should be noted, however, that the present embodiment and the present example do not limit the technical scope of the present disclosure. The present embodiment and the present example are exemplary in all respects. The present embodiment and the present example are not limiting. The technical scope of the present disclosure encompasses all changes within the meaning and scope equivalent to the description of the claims. For example, it is anticipated from the beginning that any configurations may be extracted from the present embodiment and arbitrarily combined.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram of TEM-EDS analysis of a primary particle;
FIG. 2 is another conceptual diagram of the TEM-EDS analysis of the primary particle;
FIG. 3 is a conceptual diagram showing a secondary particle according to an embodiment;
FIG. 4 is a schematic flowchart showing a method for producing a cathode active material according to the embodiment;
FIG. 5 is a schematic perspective view of a battery according to the embodiment;
FIG. 6 is a schematic sectional view taken along line VI-VI in FIG. 5; and
FIG. 7 is a table showing experimental results of Nos. 1 to 5 in examples.

DETAILED DESCRIPTION OF EMBODIMENTS

Terms and Phrases

"Comprise," "include," "have," and variations thereof are open ended expressions. A configuration expressed as open ended may or may not further include additional elements in addition to the required elements. The term "consist of" is a closed ended expression. However, even configurations that are expressed by closed ended terms can include normally-associated impurities and additional elements that are irrelevant to the pertinent technology. The term "substantially consist of" is a semi-closed ended expression. Configurations that are expressed by semi-closed ended terms allow addition of elements that do not substantially affect the basic and novel characteristics of the pertinent technology.

The words such as "may" and "can" are used in a permissive sense, meaning that "it is possible," rather than in a mandatory sense, meaning "must."

The order in which a plurality of steps, actions, operations, etc. included in various methods is performed is not limited to the order described herein unless otherwise specified. For example, a plurality of steps may proceed concurrently. For example, the order of a plurality of steps may be reversed.

The terms "first," "second," etc. are only used to distinguish a plurality of elements. Such terms do not limit the elements to which they are affixed. Such terms are irrelevant to, for example, the order and importance of the elements to which they are affixed.

For example, the phrase "either or both of A and B" includes "A or B" and "A and B." The phrase "either or both of A and B" may also be written as "A and/or B."

Geometric terms are not to be construed in a strict sense. Examples of such geometric terms include "parallel", "perpendicular," and "orthogonal." For example, directions, angles, and distances may relatively vary within a range in which substantially the same or similar functions are obtained. The geometric terms can include tolerances, variations, etc. regarding, for example, designing, working, and manufacturing. There are cases in which dimensional relationships in the drawings do not match actual dimensional relationships. There are cases in which the dimensional relationships in the drawings are changed to facilitate understanding by the reader. There are cases in which the length, width, thickness, etc. are changed. There are cases in which part of configurations are omitted.

Elements described in a "singular form" may also include a plural form unless otherwise specified. For example, a particle may refer to a plurality of particles, an aggregate of particles, or a powdery or granular substance.

The numerical ranges such as "m% to n%" are inclusive ranges including their upper and lower limit values unless otherwise specified. That is, "m% to n%" indicates the numerical range of "m% or more and n% or less." Further, "m% or more and n% or less" includes "more than m% and less than n%." The phrases "equal to or more than" and "equal to or less than" are represented by inequality signs "$\geq$" and "$\leq$" with equal signs. The phrases "more than" and "less than" are represented by inequality signs ">" and "<" without equal signs. A numerical value selected as desired from the numerical range may be set to a new upper limit value or a new lower limit value. For example, a new numerical range may be set by combining as desired a numerical value in the numerical range and a numerical value shown in a different part of the present specification, in a table, in the drawings, etc.

All numerical values should be interpreted as having the term "about" in front of them. The term "about" can mean, for example, $\pm 5\%$, $\pm 3\%$, or $\pm 1\%$. All numerical values can be approximate values that can change depending on the application of the pertinent technology. All numerical values can be expressed in significant figures. Measured values can be average values of measurements that are made multiple times unless otherwise specified. The number of times of measurements may be 3 times or more, 5 times or more, or 10 times or more. Generally, as the number of measurements increases, the reliability of the average value is expected to improve more. Measured values can be rounded off based on the number of digits of the significant figures. Measured values can include error etc. associated with, for example, the detection limit of a measuring device.

The devices, software, etc. used for measurement of various values are merely examples. Items that are equivalent to devices etc. that are exemplified may also be used. When equivalent items are used, measurement conditions may be adjusted in accordance with the equivalent items.

The presence of Fe in a coating and the mass fraction of Fe in the coating are measured by the following procedure. A sample is prepared by embedding a cathode active material (powder) in a resin. The sample is thinned by a focused ion beam (FIB) or a cross section polisher (CP). The sample is observed using a transmission electron microscope (TEM). The observation magnification may be, for example, about 10000x to 50000x.

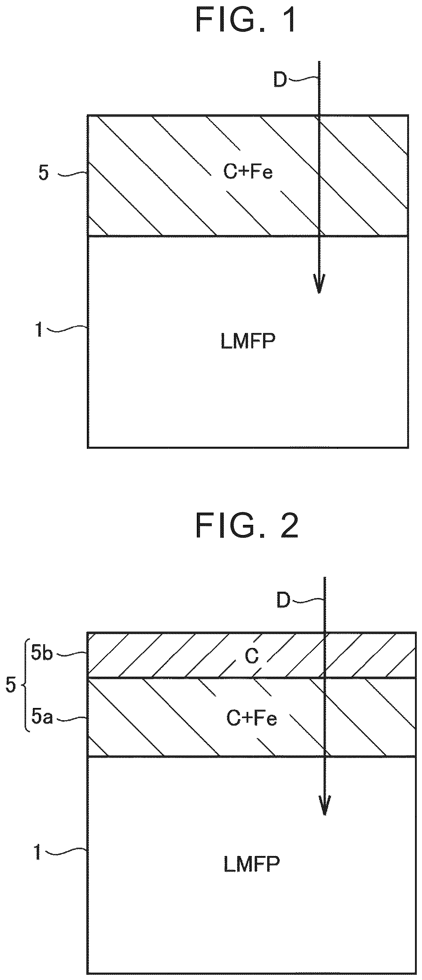

In a TEM image (sectional image), a primary particle is identified. The primary particle is the smallest unit of a particle. The substance adhering to the outer surface of the primary particle is regarded as a "coating." FIG. 1 is a conceptual diagram of the vicinity of the outermost surface of the primary particle. A radial direction D is a direction normal to the surface of a primary particle 1. Along the radial direction D, line analysis is performed. The line analysis is performed by energy dispersive X-ray spectroscopy (EDS). The analysis is performed at regularly spaced (0.5 nm) measurement points. For example, the line analysis may be performed over a region of 10 nm or more from the outermost surface of the primary particle 1. C, Fe, and Mn are elements to be measured.

The line analysis is performed to obtain a line profile of signal intensity of each element. The atomic concentration of each element is calculated based on the signal intensity of each element. The region where the atomic concentration of C is 20% or more is regarded as a "coating 5." The region where the total atomic concentration of Mn and Fe is 70% or more is regarded as the "primary particle 1." When Fe is detected in the region where the atomic concentration of C is 20% or more, the coating 5 is regarded as containing Fe. The distance from the interface between the primary particle 1 and the coating 5 to the region in the coating 5 where Fe is detected is measured.

From the results of the line analysis, the substance amount concentration of Fe in the coating 5 can be determined. The mass concentration of Fe in the coating 5 is determined by converting the substance amount concentration into a mass concentration.

The chemical composition of a compound can be measured by inductively coupled plasma atomic emission spectroscopy (ICP-AES). A sample solution is prepared by dissolving 0.1 g of the sample (e.g., a cathode active material) in a mixed acid (10 ml) of hydrochloric acid and sulfuric acid. The sample solution is then diluted to an appropriate concentration using a volumetric flask. After dilution, composition analysis is performed using an ICP-AES device. For example, product name "PS3520UVDDII (manufactured by Hitachi High-Tech Science Corporation)" may be used.

"D50" indicates the particle size at which a cumulative value becomes 50% in a volume-based particle size distribution (cumulative distribution). D50 can be measured by, for example, a laser diffraction particle size distribution measuring device.

The "maximum Feret diameter" refers to the length of the long side of a circumscribing quadrangle (rectangle or square) of a particle. When the circumscribing quadrangle is a square, the length of the long side indicates the length of one side.

A stoichiometric formula represents a representative composition of a compound. The compound may have a non-stoichiometric composition. For example, "$Al_2O_3$" is not limited to compounds having a mole ratio of "Al/O = 2/3." Unless otherwise specified, "$Al_2O_3$" refers to compounds containing Al and O in any mole ratio. For example, the compound may be doped with a trace element. Al and O may be partially substituted with another element.

A "derivative" refers to a compound in which part of a parent compound has been modified by at least one method selected from the group consisting of introduction of a functional group, substitution of an atom, oxidation, reduction, and other chemical reactions. The modification may be made at one site or at a plurality of sites. A "substituent" may include, for example, at least one selected from the group consisting of an alkyl group, an alkenyl group, an alkynyl group, a cycloalkyl group, an unsaturated cycloalkyl group, an aromatic group, a heterocyclic group, a halogen atom (F, Cl, Br, I, etc.), an OH group, a SH group, a CN group, a SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthio group, a sulfonyl group, a sulfinyl group, a ureido group, a phosphoric acid amide group, a sulfo group, a carboxy group, a hydroxamic acid group, a sulfino group, a hydrazino group, an imino group, and a silyl group. These substituents may further be substituted. When there are two or more substituents, the substituents may be the same or different. A plurality of substituents may be bonded to each other to form a ring.

Cathode Active Material

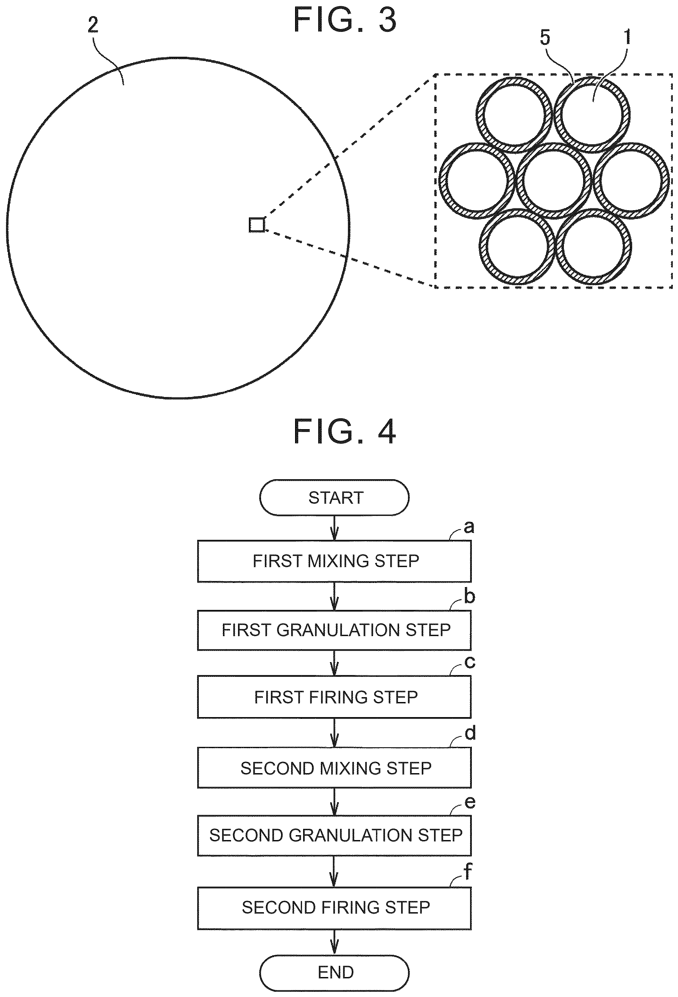

The cathode active material contains an olivine phosphate compound and a coating. The cathode active material may contain primary particles. In this case, the primary particles contain the olivine phosphate compound. The primary particles may be present alone without being aggregated. A primary particle that is present alone is also referred to as "single particle." The primary particles may form a secondary particle. FIG. 3 is a conceptual diagram showing the secondary particle according to the present embodiment. The cathode active material may be, for example, a powder of secondary particles 2. The D50 of the cathode active material may be, for example, 5 $\mu$m or more, 10 $\mu$m or more, 15 $\mu$m or more, or 20 $\mu$m or more. The D50 of the cathode active material may be, for example, 30 $\mu$m or less, 25 $\mu$m or less, 20 $\mu$m or less, 15 $\mu$m or less, or 10 $\mu$m or less.

The secondary particle 2 is an aggregate of the primary particles 1. The secondary particle 2 may have any shape. The secondary particle 2 may have, for example, a spherical shape, a rod shape, or an angular shape. The spherical secondary particle 2 is expected to improve, for example, filling properties. The sphericity of the secondary particle 2 may be, for example, 0.85 or more, 0.90 or more, or 0.95 or more. The sphericity of the secondary particle 2 may be, for example, 1 or less, 0.95 or less, or 0.90 or less. The "sphericity" refers to the circularity in a scanning electron microscope (SEM) image (two-dimensional image). The sphericity (circularity) is determined by the following expression.

$$\psi = 4\pi S/L^2$$

$\psi$: sphericity (circularity)
$\pi$: circle ratio
S: sectional area of secondary particle 2 (area of region surrounded by outline of secondary particle 2)
L: perimeter of secondary particle 2 (length of outline of secondary particle 2)

The sphericity is an arithmetic average of 30 secondary particles 2.

The primary particle 1 may have any shape. The primary particle 1 may have, for example, a spherical shape, a rod shape, or an angular shape. The maximum Feret diameter of the primary particle 1 may be, for example, 10 nm to 90 nm. The maximum Feret diameter of the primary particle 1 may be, for example, 20 nm or more, 30 nm or more, 40 nm or more, 50 nm or more, 60 nm or more, 70 nm or more, or 80 nm or more. The maximum Feret diameter of the primary particle 1 may be, for example, 80 nm or less, or 60 nm or less. The maximum Feret diameter of the primary particle 1 is an arithmetic average of 30 primary particles 1.

The coating 5 (FIG. 1) covers at least part of the surface of the primary particle 1. The coating 5 may cover the entire surface of the primary particle 1.

The coating 5 contains C and Fe. The coating 5 may contain, for example, amorphous carbon.

Fe may be present in a region having a thickness of 0.5 nm or more from the interface between the olivine phosphate compound (primary particle 1) and the coating 5. For example, referring to FIG. 2, the coating 5 includes a first region 5a and a second region 5b. The first region 5a is located between the primary particle 1 and the second region 5b. The first region 5a and the second region 5b contain C. The first region 5a contains Fe. The second region 5b does not contain Fe. In the radial direction D, the first region 5a has a distance of 0.5 nm or more. In the radial direction D, the first region 5a preferably has a distance of 1 nm or more. In the radial direction D, the first region 5a may be, for example, 2 nm or more, or 3 nm or more. In the radial direction D, the first region 5a may be, for example, 5 nm or less, or 4 nm or less. Depending on the conditions of second heat treatment in a production method described later, the second region 5b may contain Fe.

The thickness of the coating 5 may be, for example, more than 0.5 nm, 1 nm or more, 2 nm or more, 3 nm or more, 4 nm or more, or 5 nm or more. The thickness of the coating 5 may be, for example, 10 nm or less, 9 nm or less, 8 nm or less, 7 nm or less, 6 nm or less, or 5 nm or less.

The mass fraction of the coating 5 may be 0.2% or more, 0.5% or more, 1% or more, 2% or more, 3% or more, or 4% or more with respect to the mass of the cathode active material (olivine phosphate compound). The mass fraction of the coating 5 may be 10% or less, 9% or less, 8% or less, 7% or less, 6% or less, or 5% or less with respect to the mass of the cathode active material.

The mass fraction of C may be 0.1% or more with respect to the mass of the cathode active material. The mass fraction of C may be 0.3% or more, 0.5% or more, 0.7% or more, 1.0% or more, or 1.5% or more with respect to the mass of

the cathode active material. The mass fraction of C may be 5.0% or less, 4.0% or less, 3.0% or less, 2.5% or less, or 2.0% or less with respect to the mass of the cathode active material.

**[0048]** The mass fraction of Fe may be 0.1% or more with respect to the mass of the cathode active material. The mass fraction of Fe may be 0.2% or more, or 0.3% or more with respect to the mass of the cathode active material. The mass fraction of Fe may be 1.5% or less, 1.0% or less, 0.8% or less, 0.5% or less, or 0.3% or less with respect to the mass of the cathode active material. The mass fraction of Fe may be 0.1% or more and 1.0% or less, or 0.1% or more and 0.5% or less with respect to the mass of the cathode active material. The mass fraction of Fe may be 0.1% or more and 1.5% or less, 0.1% or more and 1.0% or less, or 0.1% or more and 0.5% or less with respect to the mass of the cathode active material.

**[0049]** The cathode active material contains the olivine phosphate compound. "Olivine" refers to a crystal structure belonging to the space group Pnma. The space group is identified by powder X-ray diffraction (XRD) measurement. The cathode active material may be, for example, a single-phase compound. As long as the cathode active material contains the olivine crystal phase, it may further contain a phase belonging to another space group. The cathode active material may further contain, for example, an amorphous phase.

**[0050]** The olivine phosphate compound includes at least one selected from the group consisting of LMP and LMFP. The olivine phosphate compound may have, for example, a composition represented by the following general formula.

$$Li_{1-a}Mn_{1-x}Fe_xPO_4$$

For example, a relationship of "$-0.5 \le a \le 0.5$" may be satisfied. For example, x may be 0 or more, 0.05 or more, 0.1 or more, 0.2 or more, 0.3 or more, 0.4 or more, 0.5 or more, 0.6 or more, 0.7 or more, 0.8 or more, or 0.9 or more. For example, x may be less than 1, 0.9 or less, 0.8 or less, 0.7 or less, 0.6 or less, 0.5 or less, 0.4 or less, 0.3 or less, 0.2 or less, or 0.1 or less.

**[0051]** LMP and LMFP may be doped with an element (dopant) other than lithium (Li), Mn, Fe, phosphorus (P), and oxygen (O). The doping amount (substance amount fraction with respect to the substance amount of Li) may be, for example, 0.01 to 0.1. The dopant may include, for example, at least one selected from the group consisting of boron (B), nitrogen (N), halogens, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), strontium (Sr), yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), and actinides.

**[0052]** The cathode active material may further contain other components as long as it contains either or both of LMP and LMFP. The other components may include, for example, lithium iron phosphate (LFP), lithium nickel composite oxide (LNO), lithium cobalt composite oxide (LCO), or lithium manganese composite oxide (LMO). The mixing ratio (mass ratio) of LMFP to the other components may be, for example, "LMFP/other components = 9/1 to 1/9," "LMFP/other components = 8/2 to 2/8," "LMFP/other components = 7/3 to 3/7," or "LMFP/other components = 6/4 to 4/6." The cathode active material may be, for example, a mixture of a LMFP powder and powders of the other components.

**[0053]** LFP may have, for example, a composition represented by a general formula "$Li_{1-a}FePO_4$ ($-0.5 \le a \le 0.5$)." LMP may have, for example, a composition represented by a general formula "$Li_{1-a}MnPO_4$ ($-0.5 \le a \le 0.5$)."

**[0054]** LNO may have, for example, a crystal structure belonging to the space group R-3m. LNO may have, for example, a composition represented by the following general formula.

$$Li_{1-a}Ni_xM_{1-x}O_2$$

In the formula, relationships of $-0.5 \le a \le 0.5$ and $0 \le x \le 1$ are satisfied. For example, M may include at least one selected from the group consisting of Co, Mn, and Al. For example, a relationship of $0 < x \le 0.1$, $0.1 \le x \le 0.2$, $0.2 \le x \le 0.3$, $0.3 \le x \le 0.4$, $0.4 \le x \le 0.5$, $0.5 \le x \le 0.6$, $0.6 \le x \le 0.7$, $0.7 \le x \le 0.8$, $0.8 \le x \le 0.9$, or $0.9 \le x \le 1$ may be satisfied. For example, a relationship of $-0.4 \le a \le 0.4$, $-0.3 \le a \le 0.3$, $-0.2 \le a \le 0.2$, or $-0.1 \le a \le 0.1$ may be satisfied.

**[0055]** LNO may include, for example, at least one selected from the group consisting of $LiNi_{0.9}Co_{0.1}O_2$, $LiNi_{0.9}Mn_{0.1}O_2$, and $LiNiO_2$.

**[0056]** LNO may be represented by, for example, the following general formula. The compound represented by the following general formula may also be referred to as "NCM."

$$Li_{1-a}Ni_xCo_yMn_zO_2$$

In the formula, relationships of $-0.5 \le a \le 0.5$, $0 < x < 1$, $0 < y < 1$, $0 < z < 1$, and $x + y + z = 1$ are satisfied. For example, a relationship of $0 < x \le 0.1$, $0.1 \le x \le 0.2$, $0.2 \le x \le 0.3$, $0.3 \le x \le 0.4$, $0.4 \le x \le 0.5$, $0.5 \le x \le 0.6$, $0.6 \le x \le 0.7$, $0.7 \le x \le 0.8$, $0.8 \le x \le 0.9$, or $0.9 \le x < 1$ may be satisfied. For example, a relationship of $0 < y \le 0.1$, $0.1 \le y \le 0.2$, $0.2 \le y \le 0.3$, $0.3 \le y \le 0.4$, $0.4 \le y \le 0.5$, $0.5 \le y \le 0.6$, $0.6 \le y \le 0.7$, $0.7 \le y \le 0.8$, $0.8 \le y \le 0.9$, or $0.9 \le y < 1$ may be satisfied. For example, a relationship of $0 < z \le$

$0.1, 0.1 \leq z \leq 0.2, 0.2 \leq z \leq 0.3, 0.3 \leq z \leq 0.4, 0.4 \leq z \leq 0.5, 0.5 \leq z \leq 0.6, 0.6 \leq z \leq 0.7, 0.7 \leq z \leq 0.8, 0.8 \leq z \leq 0.9$, or $0.9 \leq z < 1$ may be satisfied.

NCM may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

LNO may be represented by, for example, the following general formula. The compound represented by the following general formula may also be referred to as "NCA."

$$Li_{1-a}Ni_xCo_yAl_zO_2$$

In the formula, relationships of $-0.5 \leq a \leq 0.5, 0 < x < 1, 0 < y < 1, 0 < z < 1$, and $x + y + z = 1$ are satisfied. For example, a relationship of $0 < x \leq 0.1, 0.1 \leq x \leq 0.2, 0.2 \leq x \leq 0.3, 0.3 \leq x \leq 0.4, 0.4 \leq x \leq 0.5, 0.5 \leq x \leq 0.6, 0.6 \leq x \leq 0.7, 0.7 \leq x \leq 0.8, 0.8 \leq x \leq 0.9$, or $0.9 \leq x < 1$ may be satisfied. For example, a relationship of $0 < y \leq 0.1, 0.1 \leq y \leq 0.2, 0.2 \leq y \leq 0.3, 0.3 \leq y \leq 0.4, 0.4 \leq y \leq 0.5, 0.5 \leq y \leq 0.6, 0.6 \leq y \leq 0.7, 0.7 \leq y \leq 0.8, 0.8 \leq y \leq 0.9$, or $0.9 \leq y < 1$ may be satisfied. For example, a relationship of $0 < z \leq 0.1, 0.1 \leq z \leq 0.2, 0.2 \leq z \leq 0.3, 0.3 \leq z \leq 0.4, 0.4 \leq z \leq 0.5, 0.5 \leq z \leq 0.6, 0.6 \leq z \leq 0.7, 0.7 \leq z \leq 0.8, 0.8 \leq z \leq 0.9$, or $0.9 \leq z < 1$ may be satisfied.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

Method for Producing Cathode Active Material

FIG. 4 is a schematic flowchart showing a method for producing a cathode active material according to the present embodiment. Hereinafter, the "method for producing a cathode active material according to the present embodiment" may be abbreviated to "present method." The present method may include, for example, "(a) first mixing step," "(b) first granulation step," "(c) first firing step," "(d) second mixing step," "(e) second granulation step," and "(f) second firing step."

(a) First Mixing Step

This step is a step of forming a first slurry by mixing a manganese compound, a lithium compound, a phosphate compound, a carbon source, and a first solvent. Hereinafter, an example of producing LMFP as the cathode active material will be described. However, the cathode active material in the present disclosure is not limited to LMFP.

For example, the manganese compound, the lithium compound, the phosphate compound, and the iron compound may be weighed to achieve a composition ratio (mole ratio) represented by the composition formula "$Li_{1-a}Mn_{1-x}Fe_xPO_4$ ($-0.5 \leq a \leq 0.5, 0 \leq x < 1$)." The manganese compound may include, for example, manganese carbonate. The lithium compound may include, for example, lithium hydroxide. The phosphate compound may include, for example, lithium dihydrogen phosphate. The iron compound may include, for example, ferric phosphate.

The carbon source is the source of C in the coating. The carbon source may include, for example, sugars or organic acids. The carbon source may include, for example, glucose, sucrose, fructose, or citric acid. The addition amount of the carbon source may be, for example, 1% to 20% by mass with respect to the raw material mixture.

The first solvent may include, for example, water. The solid content concentration of the first slurry may be, for example, 10% to 50% by mass.

The particle size in the first slurry may be adjusted by performing wet milling. For example, the wet milling may be performed such that the D50 is 0.10 $\mu$m to 1 $\mu$m.

(b) First Granulation Step

This step is a step of forming first precursor particles by drying the first slurry.

For example, the first precursor particles may be obtained by granulation using a spray drying method. The inlet temperature may be, for example, 230°C to 270°C. The outlet temperature may be, for example, 100°C to 130°C. The intake pressure may be, for example, 1.8 MPa to 2.2 MPa. The nozzle pressure of a spray nozzle may be, for example, 0.1 MPa to 0.3 MPa.

(c) First Firing Step

This step is a step of forming second precursor particles by subjecting the first precursor particles to first heat treatment.

Any heat treatment furnace (e.g., an electric furnace or a muffle furnace) can be used. The atmosphere in this step may be, for example, an inert atmosphere. The inert atmosphere may be, for example, a nitrogen atmosphere. The first heat treatment temperature may be, for example, 400°C to 700°C. The first heat treatment time may be, for example, 4 hours to 6 hours. In the temperature rising process during firing, the temperature rise may be stopped at about 200°C and the temperature may be maintained at 200°C for about one hour instead of being raised continuously.

(d) Second Mixing Step

This step is a step of forming a second slurry by mixing the second precursor particles, a chelate compound, and a second solvent.

The chelate compound is the source of C and Fe in the coating. The chelate compound contains Fe and a ligand. The ligand includes, for example, a sugar carboxylic acid. The sugar carboxylic acid may include, for example, maltobionic acid, isomaltobionic acid, maltotrionic acid, isomaltotrionic acid, maltohexanoic acid, maltotetraonic acid, cellobionic acid, or lactobionic acid. The chelate compound may be, for example, iron maltobionate. The addition amount of the chelate compound may be, for example, 0.01% to 1.0% by mass with respect to the second precursor particles.

The second solvent may include, for example, water. The solid content concentration of the second slurry may be, for example, 10% to 30% by mass.

(e) Second Granulation Step

This step is a step of forming third precursor particles by drying the second slurry.

For example, the third precursor particles may be obtained by granulation using a spray drying method. The inlet temperature may be, for example, 230°C to 270°C. The outlet temperature may be, for example, 100°C to 130°C. The intake pressure may be, for example, 1.8 MPa to 2.2 MPa. The nozzle pressure of a spray nozzle may be, for example, 0.1 MPa to 0.3 MPa.

(f) Second Firing Step

This step is a step of producing an olivine phosphate compound by subjecting the third precursor particles to second heat treatment.

Any heat treatment furnace (e.g., an electric furnace or a muffle furnace) can be used. The atmosphere in this step may be, for example, an inert atmosphere. The inert atmosphere may be, for example, a nitrogen atmosphere. The second heat treatment temperature may be, for example, 400°C to 700°C. The second heat treatment time may be, for example, 4 hours to 6 hours. In the temperature rising process during firing, the temperature rise may be stopped at about 200°C and the temperature may be maintained at 200°C for about one hour instead of being raised continuously.

Battery

In some aspects of the present embodiment, a battery has a monopolar structure. In some aspects of the present embodiment, the battery has a bipolar structure. The battery having the bipolar structure (bipolar battery) will be described as an example.

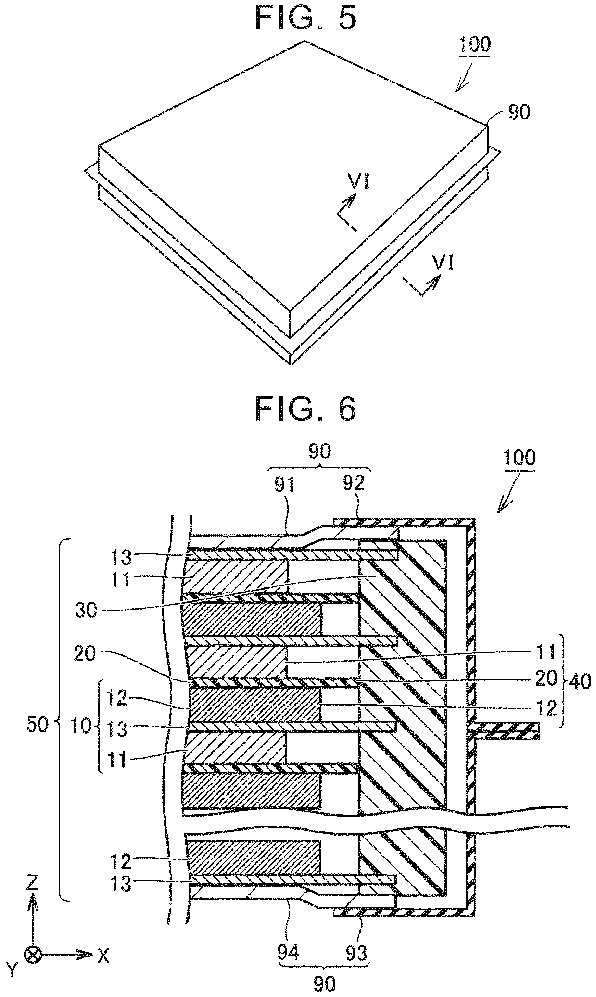

FIG. 5 is a schematic perspective view of the battery according to the present embodiment. FIG. 6 is a schematic sectional view taken along line VI-VI in FIG. 5. Hereinafter, a "surface-perpendicular direction" refers to a direction normal to the surface of a sheet-shaped member (e.g., a foil or an electrode). An "in-plane direction" refers to any direction orthogonal to the surface-perpendicular direction. In FIG. 6, the Z-axis direction corresponds to the surface-perpendicular direction. The X-axis direction and the Y-axis direction are examples of the in-plane direction.

A battery 100 includes an outer casing 90 and a power generating element 50. The outer casing 90 houses the power generating element 50. The outer casing 90 may include, for example, a first current collecting plate 91, a first laminate film 92, a second laminate film 93, and a second current collecting plate 94. The first laminate film 92 and the second laminate film 93 are joined to each other at their ends in the in-plane direction. At the joint between the first laminate film 92 and the second laminate film 93, a sealant (not shown) may be interposed between the first laminate film 92 and the second laminate film 93.

The first current collecting plate 91 and the second current collecting plate 94 are joined to the power generating element 50 at their ends in a laminating direction (Z-axis direction). The first laminate film 92 is joined to the first current collecting plate 91. The second laminate film 93 is joined to the second current collecting plate 94. At the joint between the current collecting plate and the laminate film, a sealant (not shown) may be interposed between the current collecting plate and the laminate film.

The power generating element 50 includes a plurality of bipolar electrodes 10. The bipolar electrodes 10 are laminated in the surface-perpendicular direction (Z-axis direction). Each of the bipolar electrodes 10 includes a cathode layer 11, a current collecting foil 13, and an anode layer 12 in this order in the surface-perpendicular direction. In the in-plane direction (e.g., the X-axis direction), the current collecting foil 13 extends outward of the cathode layer 11 and the anode layer 12. For example, the current collecting foil 13 may extend outward of the cathode layer 11 and the anode layer 12 over the entire circumference in the in-plane directions.

The current collecting foil 13 is a conductor. The current collecting foil 13 may include, for example, a metal foil and a conductive resin layer. For example, the current collecting foil 13 may be formed by bonding an Al foil and a Cu foil together. The surface of the current collecting foil 13 may be coated with a carbon material. The carbon material may include, for example, carbon black.

The power generating element 50 includes a sealant 30. The sealant 30 is joined to the current collecting foil 13 at its end in the in-plane direction. The sealant 30 may be, for example, thermally welded to the current collecting foil 13. For example, the sealant 30 may be disposed over the entire circumference in the in-plane directions. The sealant 30 may include, for example, a resin material. The sealant 30 seals the space between the current collecting foils 13 adjacent to each other in the surface-perpendicular direction. The space between the current collecting foils 13 is sealed with the sealant 30 to define a cell 40. The cell 40 is the smallest unit of the power generating element 50. Since the battery 100 includes a plurality of cells 40, it may also be referred to as "bipolar module." Each of the cells 40 is sealed. The cells 40 are isolated from one another. Each of the cells 40 includes the cathode layer 11, a separator 20, the anode layer 12, and an electrolyte solution.

Cathode Layer

The cathode layer 11 adheres to one surface of the current collecting foil 13. For example, grooves may be formed in the cathode layer 11. The cathode layer 11 may be formed in, for example, a stripe pattern. The cathode layer 11 contains a cathode active material. That is, the electrode contains the cathode active material. Details of the cathode active material are as described above.

The cathode layer 11 may further contain, for example, a conductive material and a binder in addition to the cathode active material. For example, 0.1 parts by mass to 10 parts by mass of the conductive material may be contained with respect to 100 parts by mass of the cathode active material. The conductive material may include any component. The conductive material may include, for example, at least one selected from the group consisting of graphite, acetylene black (AB), Ketjenblack (registered trademark), vapor-grown carbon fibers (VGCF), carbon nanotubes (CNT), and graphene flakes (GF).

For example, 0.1 parts by mass to 10 parts by mass of the binder may be contained with respect to 100 parts by mass of the cathode active material. The binder may include any component. The binder may include, for example, at least one selected from the group consisting of polyvinylidene difluoride (PVdF), polyvinylidene difluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinylpyrrolidone (PVP), polyoxyethylene alkyl ether, and derivatives thereof.

The cathode layer 11 may further contain, for example, an inorganic filler, an organic filler, a solid electrolyte, a surface modifier, a dispersant, a lubricant, a flame retardant, a protectant, a flux, a coupling agent, and an adsorbent. The cathode layer 11 may contain, for example, polyoxyethylene allylphenyl ether phosphate, zeolite, a silane coupling agent, $MoS_2$, or $WO_3$.

Anode Layer

The anode layer 12 adheres to one surface of the current collecting foil 13. The anode layer 12 is disposed on the back side of the cathode layer 11. The anode layer 12 may have a larger area than the cathode layer 11. The anode layer 12 contains an anode active material.

The anode active material may be, for example, in the form of particles or a sheet. The D50 of the anode active material may be, for example, 1 $\mu$m or more, 5 $\mu$m or more, or 10 $\mu$m or more. The D50 of the anode active material may be, for example, 30 $\mu$m or less, 20 $\mu$m or less, 15 $\mu$m or less, or 10 $\mu$m or less.

The anode active material may include any component. The anode active material may include, for example, at least one selected from the group consisting of a carbon-based active material, an alloy-based active material, a Si-C composite material, Li metal, a Li-based alloy, and lithium titanate. In some aspects of the present embodiment, the battery may be a Li metal anode battery.

The carbon-based active material may include, for example, at least one selected from the group consisting of graphite, soft carbon, and hard carbon. "Graphite" is a general term for natural graphite and artificial graphite. The graphite may be a mixture of natural graphite and artificial graphite. The mixing ratio (mass ratio) may be, for example, "natural graphite/artificial graphite = 1/9 to 9/1," "natural graphite/artificial graphite = 2/8 to 8/2," or "natural graphite/artificial graphite = 3/7 to 7/3."

The surface of the graphite may be coated with, for example, amorphous carbon. The surface of the graphite may be coated with, for example, a different material. The different material may include, for example, at least one selected from the group consisting of P, W, Al, and O. The different material may include, for example, at least one selected from the group consisting of $Al(OH)_3$, AlOOH, $Al_2O_3$, $WO_3$, $Li_2CO_3$, $LiHCO_3$, and $Li_3PO_4$.

The alloy-based active material may include, for example, at least one selected from the group consisting of Si, Li silicate, SiO, a Si-based alloy, tin (Sn), SnO, and a Sn-based alloy.

SiO may be represented by, for example, the following general formula. $SiO_x$
In the formula, a relationship of $0 < x < 2$ is satisfied. For example, a relationship of $0.5 \leq x \leq 1.5$ or $0.8 \leq x \leq 1.2$ may be satisfied.

"Si-C composite material" refers to a composite material of a carbon-based active material (such as graphite) and an alloy-based active material (such as Si). For example, fine Si particles may be dispersed within carbon particles. For example, fine Si particles may be dispersed within graphite particles. For example, Li silicate particles may be coated with a carbon material (amorphous carbon etc.).

Separator

The separator 20 can separate the cathode layer 11 from the anode layer 12. The separator 20 has electrical insulation properties. The separator 20 may include, for example, at least one selected from the group consisting of a resin film (polymer film), an inorganic particle layer, and an organic particle layer. The separator 20 may include, for example, the resin film and the inorganic particle layer.

The resin film is porous. The resin film may include, for example, a microporous film or a nonwoven fabric. The resin film includes a resin skeleton. The resin skeleton may be continuous, for example, in the form of a net. Pores are formed in the gaps in the resin skeleton. The resin film is permeable to an electrolyte solution. The resin film may have an average pore size of, for example, 1 $\mu$m or less. The resin film may have an average pore size of, for example, 0.01 $\mu$m to 1 $\mu$m, or 0.1 $\mu$m to 0.5 $\mu$m. The "average pore size" can be measured by mercury porosimetry. The Gurley value of the resin film may be, for example, 50 s/100 cm$^3$ to 250 s/100 cm$^3$. The "Gurley value" can be measured by the Gurley test method.

The resin film may include, for example, at least one selected from the group consisting of an olefin resin, a polyurethane resin, a polyamide resin, a cellulose resin, a polyether resin, an acrylic resin, and a polyester resin. The resin film may include, for example, at least one selected from the group consisting of polyethylene (PE), polypropylene (PP), polyamide (PA), polyamideimide (PAI), polyimide (PI), aromatic polyamide (aramid), polyphenylene ether (PPE), and derivatives thereof. The resin film can be formed by, for example, a stretching method or a phase separation method. The thickness of the resin film may be, for example, 5 $\mu$m to 50 $\mu$m, or 10 $\mu$m to 25 $\mu$m.

The resin film may have, for example, a single-layer structure. The resin film may be made of, for example, a PE layer. The skeleton of the PE layer is formed by PE. The PE layer may have a shutdown function. The resin film may have, for example, a multilayer structure. The resin film may include, for example, a PP layer and a PE layer. The skeleton of the PP layer is formed by PP. The resin film may have, for example, a three-layer structure. The resin film may be formed by, for example, laminating a PP layer, a PE layer, and a PP layer in this order. The thickness of the PE layer may be, for example, 5 $\mu$m to 20 $\mu$m. The thickness of the PP layer may be, for example, 3 $\mu$m to 10 $\mu$m.

The inorganic particle layer may be formed on the surface of the resin film. The inorganic particle layer may be formed on only one surface of the resin film, or on both surfaces. The inorganic particle layer may be formed on the surface facing the cathode layer 11 or on the surface facing the anode layer 12. The inorganic particle layer may be formed on the surface of the cathode layer 11 or on the surface of the anode layer 12.

The inorganic particle layer is porous. The inorganic particle layer includes inorganic particles. The inorganic particles may also be referred to as "inorganic fillers." Pores are formed in the gaps between the inorganic particles. The thickness of the inorganic particle layer may be, for example, 0.5 $\mu$m to 10 $\mu$m, or 1 $\mu$m to 5 $\mu$m. The inorganic particle may contain, for example, a heat-resistant material. The inorganic particle layer containing the heat-resistant material is also referred to as "heat resistance layer (HRL)." The inorganic particle may contain at least one selected from the group consisting of boehmite, alumina, zirconia, titania, magnesia, silica, etc. The inorganic particle may have any shape. The inorganic particle may have, for example, a spherical shape, a rod shape, a plate shape, or a fibrous shape. The D50 of the inorganic particle may be, for example, 0.1 $\mu$m to 10 $\mu$m, or 0.5 $\mu$m to 3 $\mu$m. The inorganic particle layer may further contain a binder. The binder may include, for example, at least one selected from the group consisting of an acrylic resin, a polyamide resin, a fluorine resin, an aromatic polyether resin, and a liquid crystal polyester resin.

The separator 20 may include, for example, the organic particle layer. The separator 20 may include, for example, the organic particle layer instead of the resin film. The separator 20 may include, for example, the organic particle layer instead of the inorganic particle layer. The separator 20 may include both the resin film and the organic particle layer. The separator 20 may include both the inorganic particle layer and the organic particle layer. The separator 20 may include the resin film, the inorganic particle layer, and the organic particle layer.

The thickness of the organic particle layer may be, for example, 0.1 $\mu$m to 50 $\mu$m, 0.5 $\mu$m to 20 $\mu$m, 0.5 $\mu$m to 10

μm, or 1 μm to 5 μm. The organic particle layer includes organic particles. The organic particles may also be referred to as "organic fillers." The organic particle may contain a heat-resistant material. The organic particle may contain, for example, at least one selected from the group consisting of PE, PP, PTFE, PI, PAI, PA, and aramid. The organic particle may have, for example, a spherical shape, a rod shape, a plate shape, or a fibrous shape. The D50 of the organic particle may be, for example, 0.1 μm to 10 μm, or 0.5 μm to 3 μm.

The separator 20 may include, for example, a mixed layer. The mixed layer includes both inorganic and organic particles.

Electrolyte Solution

The electrolyte solution is a liquid electrolyte. The electrolyte solution contains a solute and a solvent. The concentration of the solute may be, for example, 0.5 mol/L to 1 mol/L, 1 mol/L to 1.5 mol/L, 1.5 mol/L to 2 mol/L, 2 mol/L to 2.5 mol/L, or 2.5 mol/L to 3 mol/L. The unit "mol/L" may also be written as "M." The solute includes a supporting salt (Li salt). The solute may include, for example, an inorganic acid salt, an imide salt, an oxalate complex, or a halide. The solute may include, for example, at least one selected from the group consisting of $LiPF_6$, $LiBF_4$, $LiClO_4$, $LiAsF_6$, $LiSbF_6$, $LiN(SO_2F)_2$ "LiFSI," $LiN(SO_2CF_3)_2$ "LiTFSI," $LiB(C_2O_4)_2$ "LiBOB," $LiBF_2(C_2O_4)$ "LiDFOB," $LiPF_2(C_2O_4)_2$ "LiDFOP," $LiPO_2F_2$, $FSO_3Li$, LiI, LiBr, and derivatives thereof.

The electrolyte solution may contain, for example, a carbonate solvent (carbonate ester solvent). The solvent may include, for example, a cyclic carbonate, a chain carbonate, or a fluorinated carbonate. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may include a cyclic carbonate (EC, PC, FEC, etc.) and a chain carbonate (EMC, DMC, DEC, etc.). The mixing ratio (volume ratio) of the cyclic carbonate to the chain carbonate may be, for example, "cyclic carbonate/chain carbonate = 1/9 to 4/6," "cyclic carbonate/chain carbonate = 2/8 to 3/7," or "cyclic carbonate/chain carbonate = 3/7 to 4/6."

The solvent may include a cyclic carbonate (EC, PC, etc.) and a fluorinated cyclic carbonate (FEC etc.). The mixing ratio (volume ratio) of the cyclic carbonate to the fluorinated cyclic carbonate may be, for example, "cyclic carbonate/fluorinated cyclic carbonate = 99/1 to 90/10," "cyclic carbonate/fluorinated cyclic carbonate = 9/1 to 1/9," "cyclic carbonate/fluorinated cyclic carbonate = 9/1 to 7/3," or "cyclic carbonate/fluorinated cyclic carbonate = 3/7 to 1/9."

The solvent may include, for example, EC, FEC, EMC, DMC, and DEC. The volume ratio of each component may satisfy a relationship represented by, for example, the following formula.

$$V_{EC} + V_{FEC} + V_{EMC} + V_{DMC} + V_{DEC} = 10$$

In the above formula, $V_{EC}$, $V_{FEC}$, $V_{EMC}$, $V_{DMC}$, and $V_{DEC}$ represent the volume ratios of EC, FEC, EMC, DMC, and DEC, respectively.

The following relationships are satisfied: $1 \leq V_{EC} \leq 4$, $0 \leq V_{FEC} \leq 3$, $V_{EC} + V_{FEC} \leq 4$, $0 \leq V_{EMC} \leq 9$, $0 \leq V_{DMC} \leq 9$, $0 \leq V_{DEC} \leq 9$, $6 \leq V_{EMC} + V_{DMC} + V_{DEC} \leq 9$.

For example, a relationship of $1 \leq V_{EC} \leq 2$ or $2 \leq V_{EC} \leq 3$ may be satisfied.

For example, a relationship of $1 \leq V_{FEC} \leq 2$ or $2 \leq V_{FEC} \leq 4$ may be satisfied.

For example, a relationship of $3 \leq V_{EMC} \leq 4$ or $6 \leq V_{EMC} \leq 8$ may be satisfied.

For example, a relationship of $3 \leq V_{DMC} \leq 4$ or $6 \leq V_{DMC} \leq 8$ may be satisfied.

For example, a relationship of $3 \leq V_{DEC} \leq 4$ or $6 \leq V_{DEC} \leq 8$ may be satisfied.

The solvent may have a composition in volume ratios of, for example, "EC/EMC = 3/7," "EC/DMC = 3/7," "EC/FEC/DEC = 1/2/7," "EC/DMC/EMC = 3/4/3," "EC/DMC/EMC = 3/3/4," "EC/FEC/DMC/EMC = 2/1/4/3," "EC/FEC/DMC/EMC = 1/2/4/3," "EC/FEC/DMC/EMC = 2/1/3/4," or "EC/FEC/DMC/EMC = 1/2/3/4."

The electrolyte solution may contain an ether-based solvent. The electrolyte solution may contain, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolyte solution may contain any additive. The addition amount (mass fraction with respect to the entire electrolyte solution) may be, for example, 0.01% to 5%, 0.05% to 3%, or 0.1% to 1%. The additive may include, for example, a solid electrolyte interphase (SEI) formation promoter, an SEI formation inhibitor, a gas generating agent, an overcharge inhibitor, a flame retardant, an antioxidant, an electrode protectant, or a surfactant.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, a phosphazene compound, a carboxylic acid ester (e.g., methyl formate (MF), methyl acetate (MA), methyl propionate (MP), or diethyl malonate (DEM)), a fluorobenzene (e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, or hexafluorobenzene), a fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, or octafluorotoluene), a benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, or 4-methylbenzotrifluoride), a fluoroxylene (e.g., 3-fluoro-o-xylene, 4-fluoro-o-xylene, 2-fluoro-m-xylene, or 5-fluoro-m-xylene), a sulfur-containing heterocyclic compound (e.g., benzothiazole, 2-methylbenzothiazole, or tetrathiafulvalene), a nitrile compound (e.g., adiponitrile or succinonitrile), a phosphate ester (e.g., trimethyl phosphate or triethyl phosphate), a carboxylic acid anhydride (e.g., acetic anhydride, propionic anhydride, oxalic anhydride, succinic anhydride, maleic anhydride, phthalic anhydride, or benzoic anhydride), an alcohol (e.g., methanol, ethanol, n-propyl alcohol, ethylene glycol, or diethylene glycol monomethyl ether), and derivatives thereof.

The components described above as the solute and the solvent may be used as trace components (additives). The additives may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives thereof.

The electrolyte solution may include an ionic liquid. The ionic liquid may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives thereof.

In some aspects of the present embodiment, the battery may include a gel electrolyte. That is, the battery may be a polymer battery. The gel electrolyte may contain an electrolyte solution and a polymer material. The polymer material may form a polymer matrix. The polymer material may include, for example, at least one selected from the group consisting of PVdF, PVdF-HFP, polyacrylonitrile (PAN), PVdF-PAN, polyethylene oxide (PEO), polyethylene glycol (PEG), and derivatives thereof.

Example

Production of Cathode Active Material

No. 1

(a) First Mixing Step

Lithium hydroxide monohydrate, manganese carbonate, ferric phosphate, and lithium dihydrogen phosphate were weighed to achieve the composition ratio represented by the composition formula "$Li_{1.04}Mn_{0.6}Fe_{0.4}PO_4$." Glucose was weighed in a mass fraction of 8% with respect to the total mass of the raw materials. The weighed materials and water were mixed to form a first slurry. The solid content concentration of the first slurry was 10% to 50% by mass. Wet milling was performed such that the D50 was 0.30 $\mu$m.

(b) First Granulation Step

The first slurry was subjected to spray drying to form first precursor particles. The inlet temperature was 250°C, the outlet temperature of a spray dryer was 115±15°C, the intake pressure was 2.0 MPa, and the nozzle pressure of a spray nozzle was 0.2±0.1 MPa. The target value of D50 for the first precursor particles was 9±5 $\mu$m.

(c) First Firing Step

The first precursor particles were fired in a nitrogen atmosphere to synthesize a cathode active material (LMFP). The conditions for this step are as follows. First, the furnace temperature is raised to 200°C at a temperature rising rate of 3°C/min. The furnace temperature is maintained at 200°C for 1 hour. Next, the furnace temperature is raised to 650°C at a temperature rising rate of 5°C/min. The furnace temperature is maintained at 650°C for 5 hours. Then, the furnace temperature is dropped to 400°C at a temperature dropping rate of 2°C/min. The furnace temperature is further dropped to room temperature at a temperature dropping rate of 15°C/min.

Nos. 2 to 5

Steps (a) to (c) were performed under the same conditions as in No. 1. The LMFP in No. 1 is assumed to be "second precursor particles" described below.

(d) Second Mixing Step

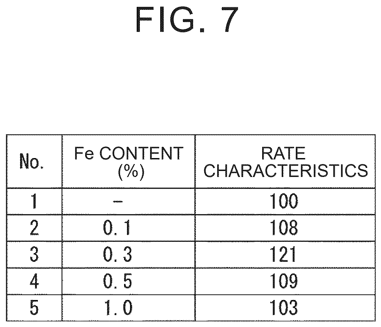

Iron maltobionate was weighed such that the mass fraction of Fe with respect to the mass of the resulting LMFP was the value shown in FIG. 7. The second precursor particles, iron maltobionate, and water were mixed to form a second slurry. The solid content concentration of the second slurry was 15% by mass.

(e) Second Granulation Step

The second slurry was subjected to spray drying to form third precursor particles. The inlet temperature was 250°C, the outlet temperature of a spray dryer was $115\pm15$°C, the intake pressure was 2.0 MPa, and the nozzle pressure of a spray nozzle was $0.2\pm0.1$ MPa.

(f) Second Firing Step

The third precursor particles were fired in a nitrogen atmosphere to synthesize a cathode active material (LMFP). The conditions for this step are as follows. First, the furnace temperature is raised to 200°C at a temperature rising rate of 3°C/min. The furnace temperature is maintained at 200°C for 1 hour. Next, the furnace temperature is raised to 650°C at a temperature rising rate of 5°C/min. The furnace temperature is maintained at 650°C for 5 hours. Then, the furnace temperature is dropped to 400°C at a temperature dropping rate of 2°C/min. The furnace temperature is further dropped to room temperature at a temperature dropping rate of 15°C/min.

Production of Coin Cell

The cathode active material, a conductive material (acetylene black), and a binder (PVdF) were mixed to form a mixture. The mixing ratio (mass ratio) was "cathode active material/conductive material/binder = 92/5/3." The mixture was dispersed in a solvent (N-methyl-2-pyrrolidone) to form a paste. The solid content concentration of the paste was 50% by mass. The paste was applied to the surface of an Al foil and dried to form a cathode layer. The density of the cathode layer was adjusted to 1.8 g/cm$^3$ by roll pressing to form a cathode blank. The cathode blank was subjected to vacuum drying treatment at 120°C for 12 hours. After the drying, a disc sample (diameter: 14 mm) was punched out from the cathode blank.

In a glove box, a coin cell was assembled. The cell configuration is as follows.

Working electrode: disc sample (cathode)
Counter electrode: Li foil
Separator: porous polymer membrane
Electrolyte solution: "EC/DMC = 3/7 (volume ratio)," LiPF$_6$ (1 mol/L)

Evaluation

Measurement

TEM-EDS analysis was performed by the method described above. As a result, in Nos. 2 to 5, Fe was detected in a region having a thickness of 0.5 nm or more from the interface between the LMFP and the coating. The concentration (mass fraction) of Fe in the coating was measured by the method described above. The results are shown in FIG. 7.

Rate Characteristics

The discharge capacity ratio (1C/0.1C) was measured by the following procedure. It is believed that the rate characteristics are better as the discharge capacity ratio (1C/0.1C) increases.

A rate corresponding to 1C is determined based on the discharge capacity (theoretical capacity) obtained from the applied mass of the cathode layer. "C" is a symbol indicating the rate (time rate) of current. At a rate of 1C, the theoretical capacity is discharged in one hour. At 25°C, the coin cell is charged by constant current-constant voltage (CCCV) charging under the following conditions.

Constant current (CC) charging rate: 0.1C
Upper limit charging voltage: 4.3 V
Cutoff current rate during constant voltage (CV) charging: 0.01C

After the charging, CC discharge is performed at 25°C at a rate of 0.1C to 3.0 V to measure the discharge capacity (0.1C). The coin cell is charged again by the CCCV charging described above. After the charging, CC discharge is performed at 25°C at a rate of 1C to 3.0 V to measure the discharge capacity (1C). The discharge capacity ratio (1C/0.1C) is determined by dividing the discharge capacity (1C) by the discharge capacity (0.1C). The results are shown in FIG. 7. The values of the rate characteristics in FIG. 7 are relative values when the discharge capacity ratio of No. 1 is 100.

Results

As shown in FIG. 7, when the conditions of the present disclosure are satisfied, there is a tendency for the rate characteristics to improve.

**Claims**

1. A cathode active material comprising:

   an olivine phosphate compound (1) including at least one selected from the group consisting of lithium manganese phosphate and lithium manganese iron phosphate; and
   a coating (5) that covers at least part of a surface of the cathode active material, and contains carbon and iron.

2. The cathode active material according to claim 1, wherein the iron is present in a region having a thickness of 0.5 nm or more from an interface between the olivine phosphate compound (1) and the coating (5).

3. The cathode active material according to claims 1 or 2, wherein a mass fraction of the iron in the coating (5) is 0.1% or more with respect to a mass of the cathode active material.

4. The cathode active material according to any one of claims 1 to 3, wherein the olivine phosphate compound (1) is the lithium manganese iron phosphate.

5. A battery (100) comprising the cathode active material according to any one of claims 1 to 4.

6. The battery (100) according to claim 5, wherein the battery (100) has a bipolar structure.

7. A method for producing a cathode active material, the method comprising:

   forming a first slurry by mixing a manganese compound, a lithium compound, a phosphate compound, a carbon source, and a first solvent;
   forming first precursor particles by drying the first slurry;
   forming second precursor particles by subjecting the first precursor particles to first heat treatment;
   forming a second slurry by mixing the second precursor particles, a chelate compound, and a second solvent, the chelate compound containing iron;
   forming third precursor particles by drying the second slurry; and
   producing an olivine phosphate compound (1) by subjecting the third precursor particles to second heat treatment, at least part of a surface of the olivine phosphate compound (1) being covered with a coating (5).

8. The method for producing the cathode active material according to claim 7, wherein the chelate compound includes a sugar carboxylic acid.

# FIG. 1

# FIG. 2

# FIG. 3

# FIG. 4

# FIG. 5

100

90

VI

VI

# FIG. 6

90

91    92

100

13

11

30

20

11

20    40

12

12

50   10   12

13

11

11

12

13

Z

Y    X

94    93

90

# FIG. 7

| No. | Fe CONTENT (%) | RATE CHARACTERISTICS |
|-----|-----|-----|
| 1 | – | 100 |
| 2 | 0. 1 | 108 |
| 3 | 0. 3 | 121 |
| 4 | 0. 5 | 109 |
| 5 | 1. 0 | 103 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014225409 A